# EUROPÄISCHE PATENTSCHRIFT

(11) **EP 4 001 080 B1**
(45) Veröffentlichungstag und Bekanntmachung des Hinweises auf die Patenterteilung: **08.02.2023**
(21) Anmeldenummer: 21207397.7
(22) Anmeldetag: 10.11.2021
(51) Int. Cl.: B62K 7/04, B62K 5/10, B62K 5/06, B62M 6/55

(54) **LASTENRAD**
LOAD WHEEL
BICYCLETTE CARGO

(30) Priorität: 12.11.2020 DE 102020129909
(43) Veröffentlichungstag der Anmeldung: 25.05.2022
(73) Patentinhaber: MPR GmbH & Co. KG, 95615 Marktredwitz (DE)
(72) Erfinder: Pürner, Marcus, Marktredwitz (DE)
(74) Vertreter: Friderichs, Gunther

(56) Entgegenhaltungen:
- WO-A1-2019/162714
- DE-A1- 4 124 926
- DE-U1- 9 211 853
- GB-A- 1 448 805
- US-B1- 9 193 415

## Beschreibung

### Gebiet der Erfindung

Die Erfindung betrifft ein mehrspuriges Fahrzeug, welches insbesondere als Lastenrad ausgebildet ist. Insbesondere betrifft die Erfindung ein Lastenrad mit einem elektrischen Unterstützungsantrieb.

### Hintergrund der Erfindung

Bei Lastenrädern, wie diese insbesondere zum Transport von Paketen, aber auch zur Personenbeförderung, insbesondere zur Beförderung von Kindern und Tieren, verwendet werden können, haben sich zwei grundlegende Bauformen durchgesetzt.

So gibt es zum einen Lastenräder, bei welchen sich eine Transportbox für die Last vor dem Fahrer befindet. Diese Art von Lastenrädern umfasst in aller Regel zwei Räder und fährt sich dementsprechend wie ein normales Fahrrad.

Weiter gibt es, insbesondere zum Transport von schwereren Lasten, Lastenräder, welche als mehrspuriges Fahrzeug mit drei Rädern ausgebildet sind und bei denen sich die Last hinter dem Fahrer zwischen den beiden Hinterrädern befindet.

Ist ein derartiges Lastenrad mit einem herkömmlichen starren Rahmen versehen, versteht es sich, dass sich der Fahrer nicht mehr mit dem Lastenrad in die Kurve neigen kann. Ein Umkippen des Lastenrads wird also allein durch das jeweils kurvenäußere Hinterrad verhindert. Dies führt zu einem unangenehmen Fahrgefühl und ermöglicht nur geringe Kurvengeschwindigkeiten. Weiter aus der Praxis bekannt sind dreirädrige Lastenräder, welche über eine Neigetechnologie verfügen. Diese umfassen zwei Vorderräder und ein Hinterrad, wobei sich beim Kurvenfahren alle drei Räder neigen, so dass sich das gesamte Fahrzeug samt Fahrer in die Kurven neigen kann. Eine derartige Konstruktion ist aber aufwendig in der Herstellung, relativ schwer und aufgrund der vielen, hierfür verwendeten Bauteile empfindlich.

Lastenräder sind aus den Dokumenten DE 41 24 926 A1,

DE 92 11 853 U1, WO 2019/162714 A1, US 9 193 415 B1,

GB 1 448 805 A bekannt. DE 41 24 926 offenbart die Merkmale des Oberbegriffes des Anspruchs 1.

### Aufgabe der Erfindung

Der Erfindung liegt demgegenüber die Aufgabe zugrunde, ein mehrspuriges Fahrzeug mit einem Tretkurbelantrieb, insbesondere ein Lastenrad, bereitzustellen, welches einfach ausgestaltet ist und dennoch ermöglicht, dass sich der Fahrer in die Kurve neigen kann, damit durch das Gewicht des Fahrers keine Kippmomente verursacht werden.

### Zusammenfassung der Erfindung

Die Aufgabe der Erfindung wird bereits durch ein mehrspuriges Fahrzeug nach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein mehrspuriges Fahrzeug, welches insbesondere als Lastenrad ausgebildet ist und dem Transport von Waren und/oder Personen dient.

Das Fahrzeug umfasst ein Vorderrad, welches mit einem Lenker verbunden ist. Insbesondere ist das Vorderrad über eine Gabel, deren Schaft in ein Steuerrohr eingesetzt ist, mit dem Lenker, welcher vorzugsweise als Stangenlenker ausgebildet ist, verbunden.

Weiter umfasst das Fahrzeug zumindest zwei nebeneinander angeordnete und voneinander beabstandete Hinterräder. Eine Transporteinrichtung erstreckt sich vorzugsweise zumindest abschnittsweise zwischen den Hinterrädern, beispielsweise eine Transportbox oder ein Kindersitz.

Das Fahrzeug umfasst des Weiteren einen Sitz, insbesondere einen Sattel, welcher vorzugsweise mittels einer Sattelstütze in das Sitzrohr geschoben ist und so in seiner Höhe verstellt werden kann.

Weiter umfasst das Fahrzeug eine zum Antrieb des Fahrzeugs ausgebildete Tretkurbel.

Das Fahrzeug wird über ein Getriebe angetrieben, welches das Drehmoment der Tretkurbel an die Hinterräder überträgt.

Insbesondere wird das Fahrzeug über ein Zugmittelgetriebe, also insbesondere ein Ketten- oder Riemengetriebe.

Dabei gibt es eine vordere Achse, insbesondere die Achse der Tretkurbel, sowie eine hintere Achse, insbesondere die Antriebachse, über die die Räder angetrieben werden.

Bei einer Verschwenkung des vorderen Rahmenteils werden gemäß der Erfindung sowohl die vordere Achse als auch die hintere Achse mit verschwenkt.

Die Erfindung sieht also insbesondere vor, dass die Schnittstelle zwischen dem verschwenkbaren Rahmenteil und dem nicht verschwenkbaren Rahmenteil durch die Antriebswellen gebildet wird.

Erfindungsgemäß wird eine Verschwenkbarkeit des vorderen Rahmenteils auch durch ein Gelenk bereitgestellt, über das die Antriebswellen angetrieben werden.

Dabei sind die Antriebsachsen mit einem Innenteil eines Gleichlaufgelenks verbunden, wobei das verschwenkbare Außenteil mit dem hinteren Kettenblatt bzw. der hinteren Riemenscheibe verbunden ist. Die Antriebsachsen sind so gegenüber dem Kettenblatt bzw. der Riemenscheibe verschwenkbar.

Ein vorderes Rahmenteil, insbesondere ein Rahmenteil, welches das Sitzrohr sowie ein Unterrohr umfasst, ist zusammen mit dem Sattel, dem Lenker und der Tretkurbel auf einer in Fahrtrichtung stehenden Achse gegenüber den beiden Hinterrädern bzw. einem hinteren Rahmenteil schwenkbar.

Dies ermöglicht, dass sich der Fahrer beim Kurvenfahren in die Kurve neigen kann, indem sich das vordere Rahmenteil verschwenkt, wohingegen die Hinterräder an einem Rahmenteil angeordnet sind, welches sich nicht mit verschwenkt bzw. auch die Hinterräder als solche folgen nicht der Verschwenkung des Vorderrads.

Vorzugsweise ist das vordere Rahmenteil gegenüber der Vertikalen um zumindest 10°, vorzugsweise zumindest 20°, besonders bevorzugt um zumindest 23° zu beiden Seiten hin schwenkbar.

Dies ermöglicht eine konstruktiv einfache Ausgestaltung, da lediglich ein Schwenklager vorhanden sein muss, welches sich zwischen dem vorderen und dem hinteren Rahmenteil befindet.

Das vordere Rahmenteil wird zusammen mit dem Fahrer bei Kurvenfahrten gegenüber dem hinteren Rahmenteil verschwenkt und verursacht dementsprechend keine Kippmomente.

Da bei Lastenrädern, bei denen sich die Last zwischen den Hinterrädern befindet, der Schwerpunkt der Last bzw. bei der erfindungsgemäßen Ausgestaltung der Schwerpunkt der Last nebst dem hinteren Rahmenteil tiefer als der Schwerpunkt des Fahrers liegt, lassen sich mit einer derartigen Konstruktion trotz der nicht vorhandenen Neigetechnik der Hinterräder hohe Kurvengeschwindigkeiten erzielen. Gleichzeitig hat ein derartiges Fahrzeug ein angenehmes Fahrgefühl, welches im Wesentlichen einem herkömmlichen Fahrrad entspricht.

Das erfindungsgemäße Fahrzeug ist derart ausgestaltet, dass eine bzw. ein zu einem Antrieb der Hinterräder führende Kette oder Riemen derart angebracht ist, dass diese bzw. dieser sich über seine gesamte Länge mit verschwenkt.

Insbesondere umfasst das Fahrzeug ein verschwenkbares starres Rahmenelement, an welchem die Kettenblätter oder Riemenscheiben angebracht sind, über die die Kraft von der Tretkurbel an die Hinterräder übertragen wird.

Das starre Rahmenelement gehört also zum vorderen Rahmenteil, welches mit verschwenkt wird.

Dadurch, dass die Antriebskette bzw. der Antriebsriemen sowohl am vorderen Kettenblatt bzw. an der vorderen Riemenscheibe (an der Tretkurbel) als auch am hinteren Kettenblatt bzw. an der hinteren Riemenscheibe mit verschwenkt wird, läuft die Achse der Tretkurbel parallel zu einer hinteren Achse, über die die Hinterräder angetrieben werden.

Es hat sich gezeigt, dass hierdurch gegenüber einer Kette bzw. einem Riemen, welcher nur an der Tretkurbel verschwenkt wird, auch größere Neigungswinkel möglich sind, ohne dass es zu Geräuschen und erhöhtem Verschließ der Antriebskomponenten kommt.

Weiter kann größtenteils, was Schaltung, Kette und Kettenblätter angeht, auf Standardkomponenten zurückgegriffen werden, die in der Regel keine derart hohe Verschwenkung zwischen den Kettenblättern zulassen, wie dies bei dem erfindungsgemäßen Fahrzeug erwünscht ist.

Das erfindungsgemäße Fahrrad umfasst vorzugsweise einen Elektromotor, welcher insbesondere als elektrischer Unterstützungsantrieb ausgebildet ist, der an der Tretkurbel sitzt.

Derartige Räder werden insbesondere auch als E-Bikes oder Pedelecs bezeichnet.

Diese umfassen einen Akku sowie eine Steuerung, über die in Abhängigkeit vom an der Tretkurbel vorhandenen Drehmoment oder in Abhängigkeit der Kurbelgeschwindigkeit die Leistung des Unterstützungsantriebs gesteuert wird.

Da bei dieser Ausführungsform sowohl der Elektromotor als auch die über die Tretkurbel angetriebene hintere Riemenscheibe bzw. das hintere Kettenblatt Teil des vorderen starren Rahmenelements sind, kann auch bei dem Elektromotor nebst seiner Komponenten auf Standardkomponenten eines Mittelmotors für E-Bikes zurückgegriffen werden.

Bei einer anderen Ausführungsform der Erfindung kann sich zumindest ein Elektromotor aber auch im Bereich der Hinterachse des Fahrzeugs befinden.

Weiter hat das Fahrzeug vorzugsweise eine Schaltung.

Die Schaltung kann insbesondere im Bereich der Hinterräder angeordnet sein. Insbesondere kann sich die Schaltung an dem hinteren Kettenblatt bzw. der hinteren Riemenscheibe befinden.

Die Schaltung kann als Nabenschaltung oder Kettenschaltung mit einer Kassette ausgebildet sein.

Weiter kann sich auch an der Tretkurbel eine Schaltung, insbesondere ein Getriebe, z.B. ein Pinion-Getriebe befinden.

Das starre Rahmenelement kann insbesondere als starres Rohr ausgebildet sein.

Insbesondere kann das starre Rahmenelement als ein einziges mittig angeordnetes Rohr ausgebildet sein, welches gegenüber einem herkömmlichen Fahrrad die Aufgabe der beiden Kettenstreben übernimmt.

Bei einer Weiterbildung der Erfindung umfasst das starre Rahmenelement zumindest eine Stufe, welche im Bereich der Hinterräder nach unten verläuft.

Dies ermöglicht die Anbringung der Achsen auf der oberen Seite des starren Rahmenelements.

Die Gelenkwellen, welche empfindlich gegenüber mechanischen Beschädigungen sind, sind so gut geschützt.

### Kurzbeschreibung der Zeichnungen

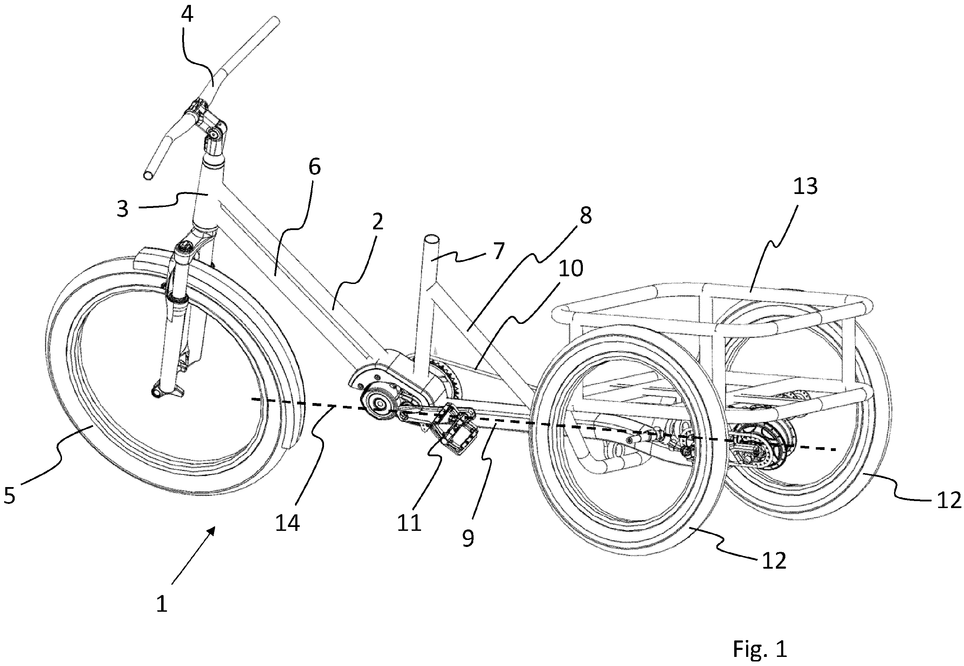

Der Gegenstand der Erfindung soll im Folgenden bezugnehmend auf die Zeichnungen Fig. 1 bis Fig. 6 näher erläutert werden.

In den Zeichnungen Fig. 1 bis Fig. 6 sind die für die Erfindung relevanten Komponenten eines mehrspurigen Fahrzeugs, welches als Lastenrad ausgebildet ist, dargestellt.
Fig. 1 bis Fig. 5 zeigen dabei eine Ausführungsform, die im Gegensatz zur Erfindung kein Gleichlaufgelenk umfasst.
Fig. 1 ist eine perspektivische Ansicht des nicht beanspruchten Lastenrads von der Seite.
Fig. 2 zeigt das nicht beanspruchten Lastenrad von hinten.
Fig. 3 ist eine geschnittene Detailansicht im Bereich der nicht beanspruchten Antriebskette.
Fig. 4 ist eine weitere Detailansicht einer nicht beanspruchten Ausführungsform
Fig. 5 ist eine Detailansicht von der gegenüberliegenden Seite, in welcher nicht beanspruchten Differenzial und Schaltung dargestellt sind.
Fig. 6 ist eine schematische Darstellung der erfindungsgemäßen Ausführungsform, bei welcher Differenzial und hinteres Kettenblatt bzw. hintere Antriebsscheibe auf einer gemeinsamen Achse angeordnet sind.

### Detaillierte Beschreibung der Zeichnungen

Fig. 1 ist eine perspektivische Ansicht eines nicht beanspruchten Lastenrads 1.

Das Lastenrad 1 umfasst einen Rahmen 2 mit einem vorne angeordneten Steuerrohr 3.

Über einen als Lenkstage ausgebildeten Lenker 4 wird in herkömmlicher Weise eines Fahrrads ein Vorderrad 5 gesteuert, indem der Lenker über eine Gabel auf das Vorderrad 5 greift.

Weiter umfasst der Rahmen 2 ein Unterrohr 6, welches bis zur Tretkurbel 11 mit den Pedalen führt.

Das hier dargestellte Lastenrad 1 ist als Tiefeinsteiger ausgebildet und umfasst kein Oberrohr.

Im Bereich der Tretkurbel 11 erstreckt sich das Sitzrohr 7 nach oben, in welches der Sattel mit der Sattelstütze (nicht dargestellt) eingesetzt werden kann.

Die Tretkurbel 11 treibt über eine Kette 10 die Hinterräder an. Weiter verfügt das hier dargestellte Lastenrad 1 über einen elektrischen Unterstützungsantrieb.

Über eine einzige Sitzstrebe 8 wird das Sitzrohr 7 nach hinten gegenüber dem Rahmen 2 abgestützt.

Der Rahmen 2 ist in ein vorderes Rahmenteil und ein hinteres Rahmenteil unterteilt.

Ein starres Rahmenelement 9, welches als mittiges Rohr ausgebildet ist, gehört zu dem vorderen verschwenkbaren Rahmenteil und führt bis zum hinteren Rahmenteil, welches die beiden Hinterräder 12 und die dazwischenliegende Transportbox 13 umfasst.

Das vordere Rahmenteil ist einschließlich des nach hinten führenden starren Rahmenelements 9 gegenüber dem hinteren Rahmenteil auf einer in Fahrtrichtung zeigenden Achse 14 verschwenkbar.

So kann sich der Fahrer zusammen mit dem vorderen Rahmenteil in die Kurve legen, wohingegen sich die beiden Hinterräder 12 beim Kurvenfahren nicht neigen (bzw. sich allenfalls aufgrund einer Federung in die entgegengesetzte Richtung neigen).

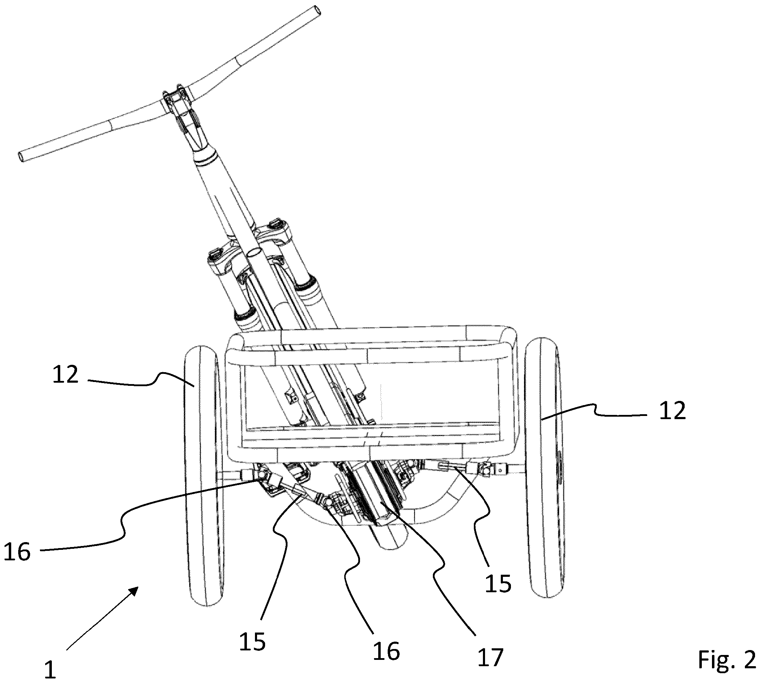

Fig. 2 ist eine Ansicht des nicht beanspruchten Lastenrads 1 von hinten, wobei in dieser Darstellung der vordere Teil des Rahmens geneigt ist.

Die Darstellung entspricht in etwa einer schnellen Kurvenfahrt.

Die beiden Hinterräder 12 werden jeweils über eine mit zwei Kreuzgelenken 16 versehene Antriebwelle 15, welche also als Gelenkwelle ausgebildet ist, angetrieben.

So kann ein im Folgenden noch detaillierter dargestelltes Kettenblatt, welches die Antriebswellen 15 antreibt, der Neigung folgen.

In diesem Ausführungsbeispiel sind die Antriebswellen 15 mit einem Differenzialgetriebe verbunden, welches in dieser Ansicht von hinten von einer Schaltung 17, welche als Nabenschaltung ausgebildet ist, verdeckt ist.

Bei dieser Ausführungsform ist also die Tretkurbel zunächst über eine Kette mit der Schaltung 17 verbunden, wobei die Schaltung 17 über eine weitere Kette mit dem Differenzial und damit den Antriebswellen 15 verbunden ist.

All diese Komponenten sind entlang des starren Rahmenelements angeordnet.

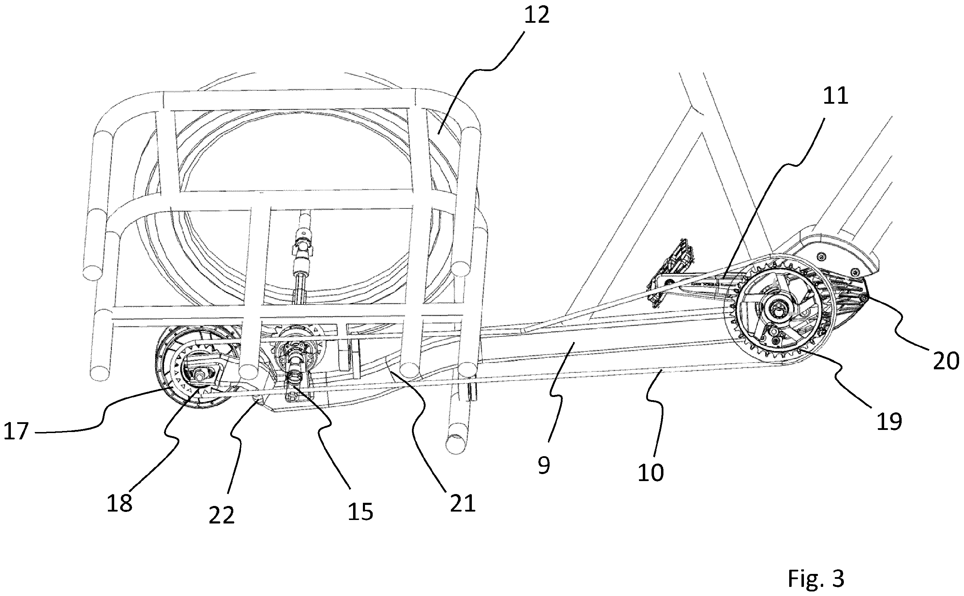

Fig. 3 ist eine aufgeschnittene Ansicht, in welcher der Antrieb auf einer Seite dargestellt ist.

Über die Tretkurbel 11 wird ein vorderes Kettenblatt 19 angetrieben (oder alternativ eine Riemenscheibe, sofern im Folgenden von Ketten und Kettenblättern die Rede ist, kann es sich alternativ auch immer um Riemen und Riemenscheiben handeln).

Die Achse des Tretlagers 11 ist des Weiteren mit einem Elektromotor 20 verbunden.

Der Elektromotor 20 ist als Mittelmotor ausgebildet und dient als elektrischer Unterstützungsantrieb.

Bei dieser nicht beanspruchten Ausführungsform läuft die Kette 10 zum hinteren Kettenblatt 18, an welchem die Schaltung 17 angeordnet ist.

Dadurch, dass vorderes Kettenblatt 19 und hinteres Kettenblatt 18 über das starre Rahmenelement 9 miteinander verbunden sind, bleibt die Achse der Tretkurbel 11 auch beim Neigen des vorderen Rahmenteils parallel zur Achse des hinteren Kettenblatts 18 bzw. der Schaltung 17.

Das starre Rahmenelement 9 umfasst eine sich vor den Hinterrädern 12 nach unten erstreckende Stufe 21.

Dies ermöglicht eine Anbringung der Antriebswellen 15 oben auf dem starren Rahmenelement 9.

Hinter den Achsen 15 umfasst das starre Rahmenelement 9 eine weitere Stufe 22.

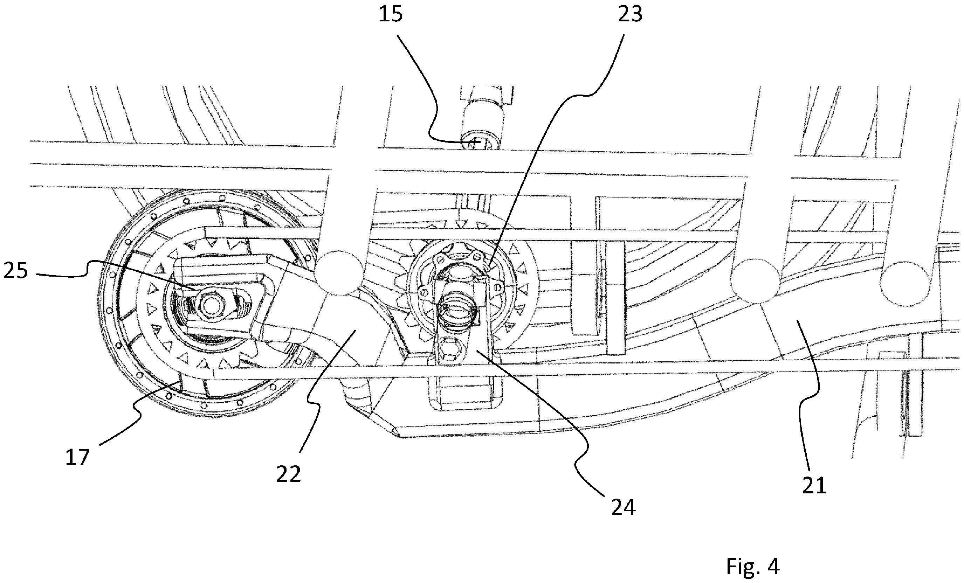

Wie in der weiteren Detaildarstellung Fig. 4 dargestellt, ist die Schaltung 17 nach der Stufe 22 an einem hinten offenen Ausfallende 25 montiert.

Über einen Träger 24, welcher zwischen den Stufen 21, 22 angeordnet ist, ist das Differenzialgetriebe 23 angebracht, welches mit den Antriebswellen 15 eine gemeinsame Achse hat.

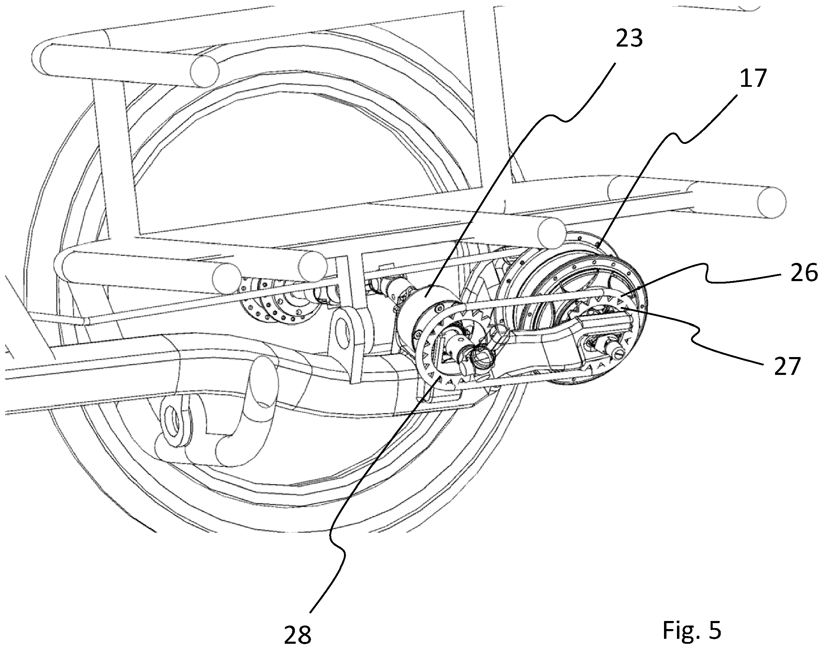

Fig. 5 ist eine aufgeschnittene Detailansicht auf die gegenüberliegende Seite.

Dargestellt ist, dass die hinten als letztes Antriebbauteil angeordnete Schaltung 17 auf der gegenüberliegenden Seite des hinteren Kettenblatts (18) ein weiteres Kettenblatt 27 umfasst, welches über eine weitere Kette 26 ein Kettenblatt 28 des Differenzialgetriebes 23 antreibt.

So kann der hinter dem Differenzialgetriebe 23 vorhandene Raum zur Anbringung der Schaltung 17 genutzt werden.

Die hier als Nabenschaltung ausgebildete Schaltung 17 kann auch als Kettenschaltung ausgebildet sein.

Die bei dieser nicht beanspruchten dargestellte Trennung der Achsen von Differenzialgetriebe und Antriebswelle ermöglicht die Verwendung von Standardbauteilen.

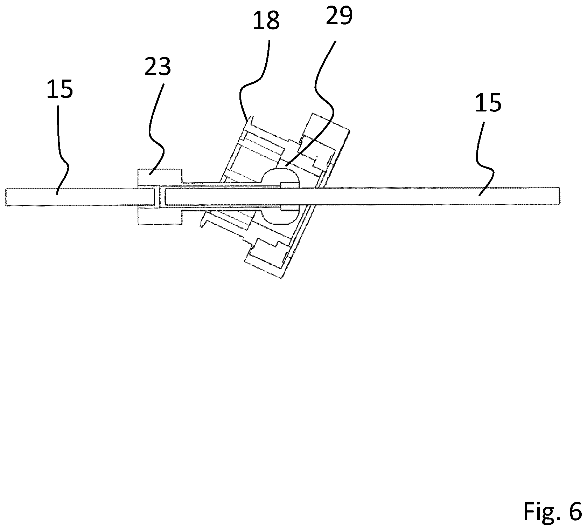

In der schematisch bezugnehmend auf Fig. 6 beschriebenen Ausführungsform der Erfindung liegen die Antriebswellen 15 sowie das hintere Kettenblatt 18 auf einer gemeinsamen Achse.

Bei dieser Ausführungsform der Erfindung ist ein Differenzial 23 mit einer Hohlwelle vorgesehen, welche in das Innenteil eines Gleichlaufgelenks 29 führt.

Über das Gleichlaufgelenk 29 kann sich das mit dem starren Rahmenelement verbundene hintere Kettenblatt 18 neigen.

Als preiswerte, nicht erfindungsgemäße Alternative zum Differenzialgetriebe 23 können die Antriebswellen 15 jeweils auch mit einem Freilauf versehen sein (nicht dargestellt).

Aufgrund der Schwenkbarkeit um das Innenteil des Gleichlaufgelenks 29 müssen die Antriebswellen 15 bei dieser Ausführungsform nicht als Gelenkwellen ausgebildet sein.

Durch die Erfindung konnte ein mehrspuriges Fahrzeug, insbesondere ausgebildet als Lastenrad, bereitgestellt werden, welches einfach aufgebaut ist, sich aber dennoch angenehm fahren lässt und welches hohe Kurvengeschwindigkeiten ermöglicht.

### Bezugszeichenliste

- 1: Lastenrad
- 2: Rahmen
- 3: Steuerrohr
- 4: Lenker
- 5: Vorderrad
- 6: Unterrohr
- 7: Sitzrohr
- 8: Sitzstrebe
- 9: starres Rahmenelement
- 10: Kette
- 11: Tretkurbel
- 12: Hinterrad
- 13: Transportbox
- 14: Achse
- 15: Antriebswelle
- 16: Kreuzgelenk
- 17: Schaltung
- 18: hinteres Kettenblatt
- 19: vorderes Kettenblatt
- 20: Elektromotor
- 21: Stufe
- 22: Stufe
- 23: Differenzialgetriebe
- 24: Träger für Differenzialgetriebe
- 25: Ausfallende
- 26: weitere Kette (zwischen Differenzialgetriebe und Schaltung)
- 27: Kettenblatt
- 28: Kettenblatt
- 29: Gleichlaufgelenk

## Patentansprüche

1. Mehrspuriges Fahrzeug, umfassend ein Vorderrad (5), welches mit einem Lenker (4) verbunden ist, sowie zumindest zwei nebeneinander angeordnete und voneinander beabstandete Hinterräder, einen Sitz, insbesondere Sattel, und eine zum Antrieb des Fahrzeugs ausgebildete Tretkurbel (11), wobei ein vorderes Rahmenteil mit dem Sattel, dem Lenker (4) und der Tretkurbel (11) auf einer in Fahrtrichtung stehenden Achse (14) gegenüber den beiden Hinterräder schwenkbar ist, wobei die Tretkurbel (11) eine vordere Achse (14) antreibt und über ein Getriebe eine hintere Achse (14) angetrieben ist, wobei bei einer Verschwenkung des vorderen Rahmenteils sowohl die vordere Achse (14) als auch die hintere Achse (14) mit verschwenkt werden, **dadurch gekennzeichnet, dass** Antriebswellen (15) mit einem Innenteil eines Gleichlaufgelenks verbunden sind, wobei ein verschwenkbares Außenteil des Gleichlaufgelenks mit einem hinteren Kettenblatt bzw. einer hinteren Riemenscheibe verbunden ist, und wobei ein Differenzial mit einer Hohlwelle versehen ist, welche in das Innenteil des Gleichlaufgelenks führt.

2. Mehrspuriges Fahrzeug nach Anspruch 1, **dadurch gekennzeichnet, dass** eine bzw. ein zu einem Antrieb der Hinterräder führende Kette (10) oder Riemen derart angebracht ist, dass sich dieser bzw. diese über seine/ihre gesamte Länge mit verschwenkt.

3. Mehrspuriges Fahrzeug nach einem der vorstehenden Ansprüche, **dadurch gekennzeichnet, dass** ein vorderes und das hintere Kettenblatt (18, 19) bzw. eine vordere und die hintere Riemenscheibe an einem einzigen in sich starren und gegenüber dem hinteren Rahmenteil verschwenkbaren starren Rahmenelement (9) angeordnet sind.

4. Mehrspuriges Fahrzeug nach einem der vorstehenden Ansprüche, **dadurch gekennzeichnet, dass** ein Elektromotor (20), insbesondere ausgebildet als elektrischer Unterstützungsantrieb, an der Tretkurbel (11) sitzt.

5. Mehrspuriges Fahrzeug nach einem der vorstehenden Ansprüche, **dadurch gekennzeichnet, dass** das vordere Rahmenteil um ein mit den Antriebswellen (15) der Hinterräder verbundenes Gelenk verschwenkbar ist.

6. Mehrspuriges Fahrzeug nach einem der vorstehenden Ansprüche, **dadurch gekennzeichnet, dass** eine Schaltung (17) im Bereich der Hinterräder angeordnet ist, insbesondere sich an der hinteren Riemenscheibe bzw. dem hinteren Kettenblatt befindet, insbesondere wobei die Schaltung (17) als Nabenschaltung ausgebildet ist, und/oder dass sich eine Schaltung (17) an der Tretkurbel (11) befindet, insbesondere eine Kettenschaltung.

7. Mehrspuriges Fahrzeug nach einem der vorstehenden Ansprüche, **dadurch gekennzeichnet, dass** das Fahrzeug als Lastenrad (1) mit einer Gepäckaufnahme zwischen den Hinterrädern ausgebildet ist.

8. Mehrspuriges Fahrzeug nach Anspruch 5, **dadurch gekennzeichnet, dass** das verschwenkbare starre Rahmenelement (9) als mittig angeordnetes Rohr oder Profil ausgebildet ist.

9. Mehrspuriges Fahrzeug nach Anspruch 5, **dadurch gekennzeichnet, dass** das verschwenkbare starre Rahmenelement (9) eine Stufe (21, 22) aufweist, welche vor den Hinterrädern nach unten verläuft.

10. Mehrspuriges Fahrzeug nach einem der vorstehenden Ansprüche, **dadurch gekennzeichnet, dass** die Hinterräder gefedert sind.

## Claims

1. A multi-lane vehicle, comprising a front wheel (5), which is connected to a handlebar (4), as well as at least two rear wheels arranged next to one another and spaced apart from one another, a seat, in particular saddle, and a foot pedal (11) formed to drive the vehicle, wherein a front frame part comprising the saddle, the handlebar (4), and the foot pedal (11) is pivotable on an axle (14), which is upright in the direction of travel, with respect to the two rear wheels, wherein the foot pedal (11) drives a front axle (14), and a rear axle (14) is driven via a drive, wherein the front axle (14) as well as the rear axle (14) are also pivoted in response to a pivoting of the front frame part, **characterized in that** drive shafts (15) are connected to an inner part of a constant velocity joint, wherein a pivotable outer part of the constant velocity joint is connected to a rear chain ring or a rear belt pulley, respectively, and wherein a differential is provided with a hollow shaft, which leads into the inner part of the constant velocity joint.

2. The multi-lane vehicle according to claim 1, **characterized in that** a chain (10) or belt leading to a drive of the rear wheels is attached in such a way that said belt or chain, respectively, also pivots over its entire length.

3. The multi-lane vehicle according to any one of the preceding claims, **characterized in that** a front and the rear chain ring (18, 19) or a front and the rear belt pulley, respectively, are arranged on a single frame element (9), which is inherently rigid and which is pivotable with respect to the rear frame part.

4. The multi-lane vehicle according to any one of the preceding claims, **characterized in that** an electric motor (20), in particular formed as electric support drive, sits on the foot pedal (11).

5. The multi-lane vehicle according to any one of the preceding claims, **characterized in that** the front frame part is pivotable about a joint, which is connected to the drive shafts (15) of the rear wheels.

6. The multi-lane vehicle according to any one of the preceding claims, **characterized in that** a gearshift (17) is arranged in the region of the rear wheels, is in particular located on the rear belt pulley or the rear chain ring, respectively, in particular wherein the gearshift (17) is formed as internal gear hub, and/or that a gearshift (17), in particular derailleur gears, is located on the foot pedal (11).

7. The multi-lane vehicle according to any one of the preceding claims, **characterized in that** the vehicle is formed as cargo bike (1) comprising a luggage rack between the rear wheels.

8. The multi-lane vehicle according to claim 5, **characterized in that** the pivotable rigid frame element (9) is formed as centrally arranged tube or profile.

9. The multi-lane vehicle according to claim 5, **characterized in that** the pivotable rigid frame element (9) has a step (21, 22), which runs downwards in front of the rear wheels.

10. The multi-lane vehicle according to any one of the preceding claims, **characterized in that** the rear wheels are springloaded.

## Revendications

1. Véhicule à plusieurs roues, comprenant une roue avant (5) qui est reliée à un guidon (4), ainsi qu'au moins deux roues arrière disposées côte à côte et espacées l'une de l'autre, un siège, en particulier une selle, et un pédalier (11) conçu pour l'entraînement du véhicule,
une partie avant du cadre avec la selle, le guidon (4) et le pédalier (11) pouvant pivoter par rapport aux deux roues arrière sur un axe (14) dans le sens du déplacement, le pédalier (11) entraînant un essieu avant (14) et un essieu arrière (14) étant entraîné par une transmission,
dans lequel, lors d'un pivotement de la partie avant du cadre, l'essieu avant (14) comme l'essieu arrière (14) sont également pivotés, **caractérisé en ce que** des arbres d'entraînement (15) sont reliés à une partie intérieure d'un joint homocinétique, une partie extérieure pivotante du joint homocinétique étant reliée à un plateau de chaîne arrière et/ou à une poulie arrière, et un différentiel étant pourvu d'un arbre creux qui mène dans la partie intérieure du joint homocinétique.

2. Véhicule à plusieurs roues selon la revendication 1, **caractérisé en ce qu'**une chaîne (10) ou une courroie menant à un entraînement des roues arrière est montée de manière à pivoter sur toute sa longueur.

3. Véhicule à plusieurs roues selon l'une des revendications précédentes, **caractérisé en ce qu'**un plateau avant et un plateau arrière (18, 19) et/ou une poulie avant et une poulie arrière sont disposés sur une seule partie du cadre rigide (9) en soi et pouvant pivoter par rapport à la partie arrière du cadre.

4. Véhicule à plusieurs roues selon l'une des revendications précédentes, **caractérisé en ce qu'**un moteur électrique (20), conçu en particulier comme entraînement d'assistance électrique, est monté sur le pédalier (11).

5. Véhicule à plusieurs roues selon l'une des revendications précédentes, **caractérisé en ce que** la partie avant du cadre peut pivoter autour d'une articulation reliée aux arbres d'entraînement (15) des roues arrière.

6. Véhicule à plusieurs roues selon l'une des revendications précédentes, **caractérisé en ce qu'**un changement de vitesse (17) est disposé dans la zone des roues arrière, en particulier se trouve sur la poulie arrière et/ou le plateau arrière, en particulier le changement de vitesse (17) étant conçu comme un moyeu à vitesses intégrées, et/ou **en ce qu'**un changement de vitesse (17) se trouve sur le pédalier (11), en particulier un dérailleur.

7. Véhicule à plusieurs roues selon l'une des revendications précédentes, **caractérisé en ce que** le véhicule est conçu comme un vélo cargo (1) avec un porte-bagages entre les roues arrière.

8. Véhicule à plusieurs roues selon la revendication 5, **caractérisé en ce que** la partie de cadre rigide pivotante (9) est conçue sous forme de tube ou de profilé disposé au centre.

9. Véhicule à plusieurs roues selon la revendication 5, **caractérisé en ce que** la partie de cadre rigide pivotante (9) comporte une marche (21, 22) qui se dirige vers le bas devant les roues arrière.

10. Véhicule à plusieurs roues selon l'une des revendications précédentes, **caractérisé en ce que** les roues arrière sont suspendues.
